# EUROPEAN PATENT APPLICATION

(11) **EP 4 080 737 A1**
(43) Date of publication of application: **26.10.2022**
(21) Application number: 20902894.3
(22) Date of filing: 16.12.2020
(51) Int. Cl.: H02K 5/10

(54) **VEHICLE POWER DEVICE AND WHEEL BEARING DEVICE WITH POWER GENERATOR**

(30) Priority: 20.12.2019 JP 2019229953
(71) Applicant: NTN Corporation, Osaka-shi, Osaka 550-0003 (JP)
(72) Inventor: YADA, Yuuji, Iwata-shi, Shizuoka 438-8510 (JP); NISHIKAWA, Kentaro, Iwata-shi, Shizuoka 438-8510 (JP)
(74) Representative: Maikowski & Ninnemann Patentanwälte Partnerschaft mbB
(86) International application number: PCT/JP2020/046923
(87) International publication number: WO 2021/125217

(57) **Abstract**

Provided is a vehicle power device and a generator-equipped wheel bearing device capable of separating an interior of the device to protect internal components from water which could potentially penetrate to the interior through press-fitting areas of bolts or the like. The vehicle power device (1) includes a wheel bearing (2) and an electric motor (3) including a stator (18) and a rotor (19). The wheel bearing (2) includes an outer ring (4) and an inner ring (5) rotatably supported by the outer ring (4) through rolling elements (6), the inner ring (5) including a hub flange (7) configured to be attached with a wheel of a vehicle. The vehicle power device includes: a rotor case (15) that covers the electric motor (3) and an inboard-side part of the wheel bearing located on an inboard side with respect to the hub flange (7) to define a separated space therein; and an annular seal component (Sc) that covers, from the inboard side of the hub flange (7), head parts (13a) of a plurality of hub bolts (13) press-fitted into the hub flange (7) and a surrounding area thereof.

## Description

### CROSS REFERENCE TO THE RELATED APPLICATION

This application is based on and claims Convention priority to Japanese patent application No. 2019-229953, filed December 20, 2019, the entire disclosure of which is herein incorporated by reference as a part of this application.

### BACKGROUND OF THE INVENTION

### (Field of the Invention)

The present invention relates to a vehicle power device and a generator-equipped wheel bearing device that are mounted in a vehicle such as an automobile and to a technology that makes it possible to prevent penetration of water and the like to an internal space of such a device.

### (Description of Related Art)

A wheel bearing for an automobile is installed in such a way that a non-rotary ring is attached to an automotive fixed component, and a rotary ring is unitedly fixed to a brake disc and/or a wheel body through a hub bolt or a wheel bolt. A double row angular contact ball bearing is used as such a wheel bearing.

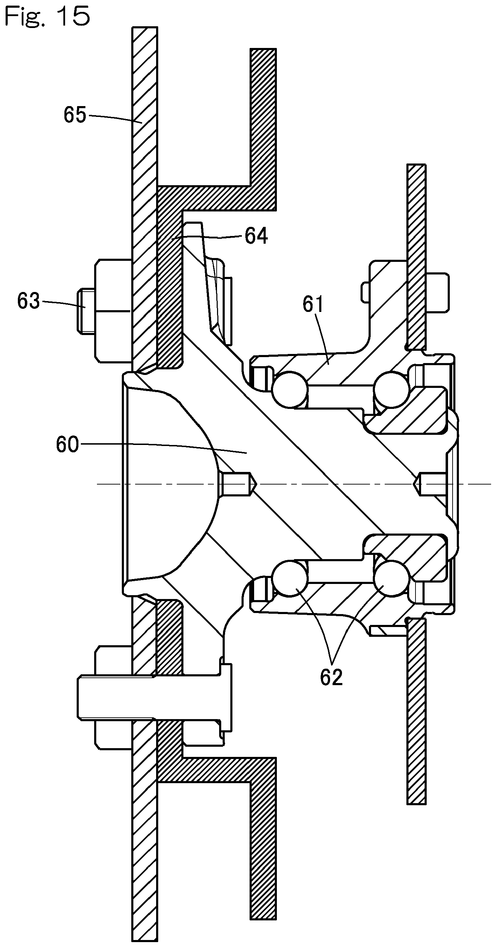

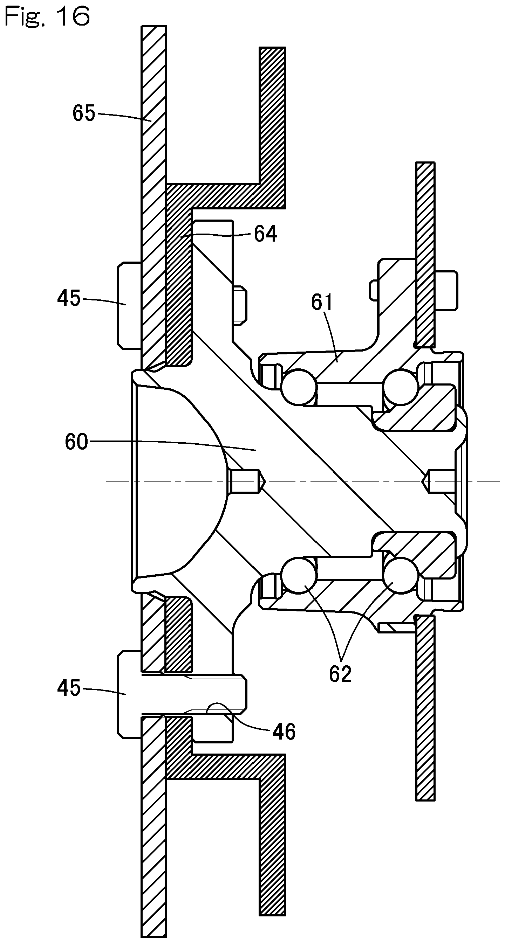

As shown in Fig. 15, a conventional wheel bearing includes, for example, an inner ring 60 as a rotary ring, an outer ring 61 as a stationary ring, and rolling elements 62 interposed between the inner and outer rings 60, 61, and hub bolts 63 are press-fitted into a hub axle of the inner ring 60. The hub bolts 63 and nuts serve to fix a brake disc 64 to a wheel body 65, and the brake disc 64 and the wheel body 65 rotate about an axle. The non-rotary outer ring 61 is fixed to an automotive fixed component by bolts. In some wheel bearings, a brake disc 64 and a wheel body 65 are fixed together by wheel bolts 45 as shown in Fig. 16.

In recent years, in association with electrification of automobiles, a vehicle power device having an electric motor (or sometimes having a generator) incorporated inside a wheel has been proposed (for example, Patent Document 1). A vehicle power device is an apparatus that unitedly includes a wheel bearing for supporting a wheel and an electric motor for driving the wheel and regenerating power and is advantageous in many aspects, such as vehicle drive assistance, power regeneration during deceleration, attitude stabilization through torque control in individual wheels.

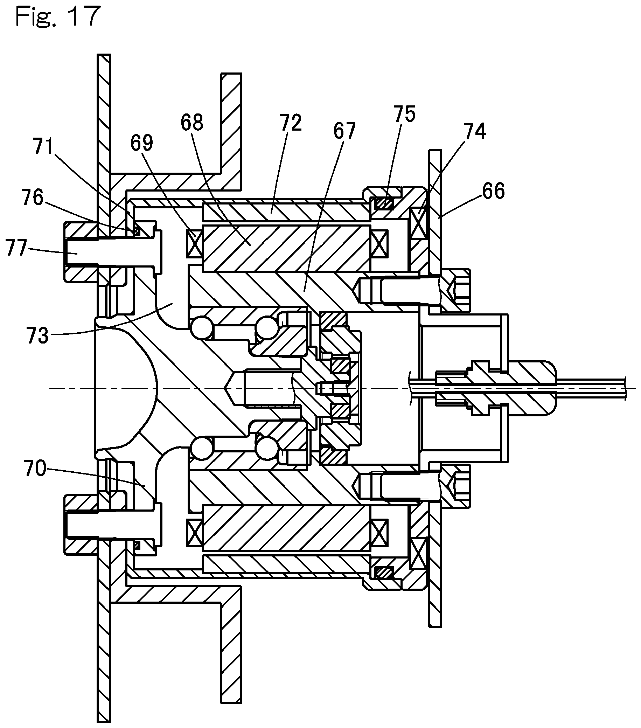

Fig. 17 is a sectional view of a conventional vehicle power device. A stator core 68 is fixed to an automotive fixed component 66 through a wheel-bearing fixing member 67. A coil wire 69 for generating a magnetic force is wound around the stator core 68. A rotor 72, on the other hand, is attached to a hub axle 70 of a wheel bearing through a rotor case 71, and the rotor 72 rotates around the stator core 68. An electric motor unitedly incorporated with the wheel bearing serves to assist driving while the automobile is driven and recover energy by generating power when the automobile is braked.

### [Related Document]

### [Patent Document]

[Patent Document 1] JP Laid-open Patent Publication No. 2018-52482

A conventional vehicle power device may experience electrical short-circuiting in a coil wire 69 or develop rust in a metal component such as a stator core 68 in case of water penetration to an internal space 73 of the device when driving in the rain, etc., which may lead to abnormality in the device. For this reason, as with a general casing for an electric motor, seal components 74, 75, 76 are inserted at locations between the internal space 73 of the device and the outside in order to prevent penetration of water.

In a vehicle power device having a conventional wheel bearing (Fig. 15) incorporated therein, however, water may enter a space 73 inside the device from press-fitting areas of hub bolts 77 (Fig. 17) of the wheel bearing or insertion holes 46 (Fig. 16) for wheel bolts 45, even if seal components 74, 75, 76 are provided as waterproofing measures, so that short-circuiting in a coil wire 69 and rust in a metal component could occur. Vehicles including vehicle power devices therein have this new problem, although conventional vehicles without vehicle power devices including electric components did not have such a problem. A sealing part for sealing a hub bolt only may be conceivable; however, the hub bolt part cannot be easily modified for vehicle safety reasons.

### SUMMARY OF THE INVENTION

An object of the invention is to provide a vehicle power device and generator-equipped wheel bearing device capable of separating an interior of the device to protect internal components from water which could potentially penetrate to the interior through press-fitting areas of bolts or the like.

A vehicle power device according to the present invention includes:
a wheel bearing including a stationary ring and a rotary ring rotatably supported by the stationary ring through rolling elements, the rotary ring including a hub flange configured to be attached with a wheel of a vehicle; and
an electric motor including a stator attached to the stationary ring and a rotor attached to the rotary ring,
wherein the vehicle power device includes:
   a covering that covers the electric motor and an inboard-side part of the wheel bearing located on an inboard side with respect to the hub flange to define a separated space therein; and
   an annular seal component that covers, from the inboard side of the hub flange, head parts of a plurality of hub bolts press-fitted into the hub flange and a surrounding area thereof or covers tip end parts of a plurality of wheel bolts inserted into the hub flange and a surrounding area thereof.

The term "surrounding area" refers to an inboard-side region which is located around the head parts of the hub bolts or the tip end parts of the wheel bolts exposed on the inboard side with respect to the hub flange and which does not interfere with the stationary components such as the stator and the stationary ring within the separated space. This region may be suitably defined on the basis of a test, simulation, etc.

According to this constitution, in a case where a vehicle power device including an electric motor is mounted in a vehicle including a main drive source such as an internal combustion engine, the electric motor can serve to, e.g., assist driving while the vehicle is driven and recover energy by generating power when the vehicle is braked. Further, the covering covers the electric motor and the inboard-side part of the wheel bearing located on the inboard side with respect to the hub flange to define the separated space therein. Moreover, the vehicle power device includes the annular seal component that covers, from the inboard side of the hub flange, the head parts of the plurality of hub bolts and the surrounding area thereof or covers the tip end parts of the plurality of wheel bolts and the surrounding area thereof.

Thus, even if water penetrates from the press-fitting areas of the hub bolts or the insertion areas of the wheel bolts when the vehicle including the vehicle power device mounted therein is driven in the rain etc., the water is blocked by the annular seal component and thus does not reach the separated space which covers the electric motor and the like. This makes it possible to prevent the coil wire of the stator from being electrically short-circuited and the stator core of the stator from rusting. Thus, the internal components can be protected from water.

The rotary ring may include a stepped part that connects to a base part of the hub flange on the inboard side, and
the annular seal component may include:
an inner-diametric-side cylindrical part joined watertightly with the stepped part;
an outer-diametric-side cylindrical part joined watertightly with an outer peripheral surface of the hub flange; and
a radial plate part connecting inboard-side ends of the inner-diametric-side cylindrical part and the outer-diametric-side cylindrical part.

In this case, the annular seal component can be easily joined by making use of the stepped part of the rotary ring and the outer peripheral surface of the hub flange. Also, the annular seal component can be disposed in an existing vacant space.

The vehicle power device may include a waterproof elastic member interposed either or both of between the inner-diametric-side cylindrical part and the stepped part and between the outer-diametric-side cylindrical part and the outer peripheral surface of the hub flange. In this case, waterproof performance can be improved as compared to a constitution without interposition of an elastic member.

The vehicle power device may include a resin member filled in an annular space delimited by the inner-diametric-side cylindrical part, the outer-diametric-side cylindrical part, the radial plate part, and the hub flange. In this case, the resin member can effectively block water penetration from the press-fitting areas of the hub bolts or the insertion areas of the wheel bolts to improve waterproof performance.

The rotary ring may include a stepped part that connects to a base part of the hub flange on the inboard side, and
the annular seal component may include:
an inner-diametric-side cylindrical part joined watertightly with the stepped part;
an outer-diametric-side cylindrical part joined watertightly with an inner peripheral surface of the covering; and
a radial plate part connecting inboard-side ends of the inner-diametric-side cylindrical part and the outer-diametric-side cylindrical part.

In this case, the annular seal component can be easily joined by making use of the stepped part of the rotary ring and the inner peripheral surface of the covering. Also, the annular seal component can be disposed in an existing vacant space.

The vehicle power device may include a waterproof elastic member interposed either or both of between the inner-diametric-side cylindrical part and the stepped part and between the outer-diametric-side cylindrical part and the inner peripheral surface of the covering. In this case, waterproof performance can be improved as compared to a constitution without interposition of an elastic member.

The elastic member may be rubber or be adhered by vulcanization to the annular seal component. Where the elastic member is rubber, a commercial product such as an O-ring may be used, so that the elastic member can be easily attached to the annular seal component. Where the elastic member is adhered by vulcanization to the annular seal component, it is possible to prevent inadvertent omission of and improper attachment of the elastic member to the annular seal component and to reduce the number of assembling steps.

The annular seal component may be made of a resin material. In this case, cost reduction can be more easily achieved than a case of an annular seal component made of a metal material.

The stationary ring may be an outer ring, the rotary ring may be an inner ring, the covering may be fixed to the hub flange of the inner ring, the covering may include a case cylindrical portion that has a cylindrical shape and covers the electric motor and the inboard-side part of the wheel bearing located on the inboard side with respect to the hub flange, and the stator may be disposed on an outer periphery of the outer ring. In this case, the case cylindrical portion extending from the hub flange toward the inboard side in a cylindrical manner can cover the electric motor and a major part of the wheel bearing to define a separated space therein.

A generator-equipped wheel bearing device according to the present invention includes:
a wheel bearing including a stationary ring and a rotary ring rotatably supported by the stationary ring through rolling elements, the rotary ring including a hub flange configured to be attached with a wheel of a vehicle; and
a generator including a stator attached to the stationary ring and a rotor attached to the rotary ring,
wherein the generator-equipped wheel bearing device includes:
   a covering that covers the generator and an inboard-side part of the wheel bearing located on an inboard side with respect to the hub flange to define a separated space therein; and
   an annular seal component that covers, from the inboard side of the hub flange, head parts of a plurality of hub bolts press-fitted into the hub flange and a surrounding area thereof or covers tip end parts of a plurality of wheel bolts inserted into the hub flange and a surrounding area thereof.

The term "surrounding area" refers to an inboard-side region which is located around the head parts of the hub bolts or the tip end parts of the wheel bolts exposed on the inboard side with respect to the hub flange and which does not interfere with the stationary components such as the stator and the stationary ring within the separated space. This region may be suitably defined on the basis of a test, simulation, etc.

According to this constitution, in a case where a generator-equipped wheel bearing device is mounted in a vehicle including a main drive source such as an internal combustion engine, the generator can serve to, e.g., recover energy by generating power when the vehicle is braked. Further, the covering covers the generator and the inboard-side part of the wheel bearing located on the inboard side with respect to the hub flange to define the separated space therein. Moreover, the generator-equipped wheel bearing device includes the annular seal component that covers, from the inboard side of the hub flange, the head parts of the plurality of hub bolts and the surrounding area thereof or covers the tip end parts of the plurality of wheel bolts and the surrounding area thereof. Thus, even if water penetrates from the press-fitting areas of the hub bolts or the insertion areas of the wheel bolts in the rain etc., the water is blocked by the annular seal component and thus does not reach the separated space which covers the generator and the like. This makes it possible to prevent the coil wire of the stator from being electrically short-circuited and the stator core of the stator from rusting. Thus, the generator can be kept normal.

The present invention encompasses any combination of at least two features disclosed in the claims and/or the specification and/or the drawings. In particular, any combination of two or more of the appended claims should be equally construed as included within the scope of the present invention.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views.
Fig. 1 is a sectional view of a vehicle power device according to an embodiment of the present invention;
Fig. 2 is a side view of the vehicle power device;
Fig. 3A shows a seal component of the vehicle power device in an enlarged manner;
Fig. 3B shows the seal component of the vehicle power device in an enlarged manner;
Fig. 3C shows the seal component of the vehicle power device in an enlarged manner;
Fig. 4 is a sectional view of a vehicle power device according to another embodiment of the present invention;
Fig. 5A shows a seal component of the vehicle power device in an enlarged manner;
Fig. 5B shows the seal component of the vehicle power device in an enlarged manner;
Fig. 5C shows the seal component of the vehicle power device in an enlarged manner;
Fig. 6 is a sectional view of a vehicle power device according to yet another embodiment of the present invention;
Fig. 7 is a sectional view of a vehicle power device according to yet another embodiment of the present invention;
Fig. 8 is a sectional view of a vehicle power device according to yet another embodiment of the present invention;
Fig. 9 is a sectional view of a vehicle power device according to yet another embodiment of the present invention;
Fig. 10 is a sectional view of a vehicle power device according to yet another embodiment of the present invention;
Fig. 11 is a sectional view of a vehicle power device according to yet another embodiment of the present invention;
Fig. 12 is a perspective view of the vehicle power device;
Fig. 13 is a sectional view of a vehicle power device according to yet another embodiment of the present invention;
Fig. 14 is a sectional view of a vehicle power device according to yet another embodiment of the present invention;
Fig. 15 is a sectional view of a conventional wheel bearing;
Fig. 16 is a sectional view of another conventional wheel bearing; and
Fig. 17 is a sectional view of a vehicle power device with a conventional wheel bearing.

### DESCRIPTION OF THE EMBODIMENTS

### [First Embodiment]

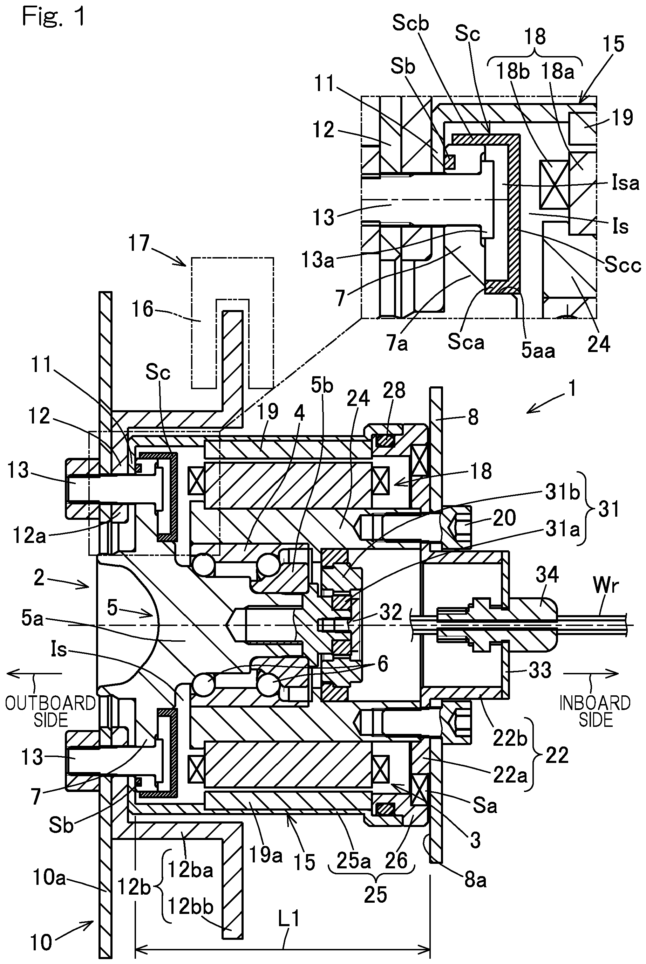

A vehicle power device according to an embodiment of the present invention will be described with reference to Fig. 1 to Fig. 3C. As shown in Fig. 1, the vehicle power device 1 includes a wheel bearing 2 and an electric motor 3.

### <Wheel Bearing 2>

The wheel bearing 2 includes: an outer ring 4 as a stationary ring, double rows of rolling elements 6, and an inner ring 5 as a rotary ring. The inner ring 5 is rotatably supported by the outer ring 4 through the double rows of rolling elements 6. Grease is filled in a bearing space between the outer ring 4 and the inner ring 5. The inner ring 5 includes: a hub axle 5a and a partial inner ring 5b fitted on an outer peripheral surface of the hub axle 5a on an inboard side. The hub axle 5a includes a hub flange 7 at a protruding part toward an outboard side in an axial direction of the wheel bearing with respect to the outer ring 4.

On an outboard-side surface of the hub flange 7, a wheel body 10a of a wheel 10, a brake rotor 12, and a case bottom 11 (which will be described later) are attached in an axially overlapping manner by hub bolts 13. A non-illustrated tire is attached on an outer periphery of the wheel body 10a. It should be noted that an "outboard side" as used herein refers to a side closer to an outside of a vehicle in a widthwise direction of the vehicle in which the vehicle power device 1 is mounted, and an "inboard side" refers to a side closer to a center of the vehicle in the widthwise direction of the vehicle.

### <Brake>

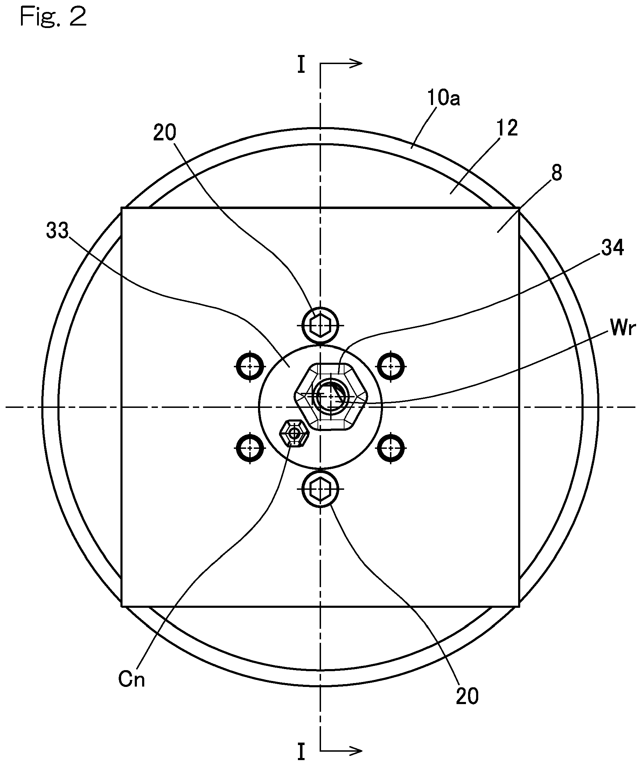

Fig. 1 is a sectional view along line I-I of Fig. 2. As shown in Fig. 1 and Fig. 2, a brake 17 is a friction brake including a disc-type brake rotor 12 and a brake caliper 16. The brake rotor 12 includes a flat plate-like part 12a and an outer peripheral part 12b. The flat plate-like part 12a is an annular member shaped like a flat plate that overlaps with the hub flange 7 with the case bottom 11 interposed therebetween. The outer peripheral part 12b includes: a cylindrical portion 12ba extending from an outer peripheral edge portion of the flat plate-like part 12a toward the inboard side in a cylindrical manner; and a flat plate portion 12bb extending from an inboard-side end of the cylindrical portion 12ba toward an outer diametric side in a flat plate-like manner.

The brake caliper 16 includes friction pads (not illustrated) which are brought against the flat plate portion 12bb of the brake rotor 12 on opposite sides. The brake caliper 16 is attached to a knuckle 8 that is a chassis frame component of the vehicle. The brake caliper 16 may be of a hydraulic or mechanical type. Alternatively, the brake caliper may be of an electric motor-driven type.

### <Electric Motor 3 and the Like>

As shown in Fig. 1, the electric motor 3 is a drive-assisting motor generator capable of generating power by rotation of the wheel 10 and of rotationally driving the wheel 10 when power is supplied. The electric motor 3 is an outer rotor type motor which includes a stator 18 and a rotor 19 and in which the rotor 19 is located radially outside of the stator 18. Further, the electric motor 3 is constructed as a direct drive type motor in which the rotor 19 is attached to the hub flange 7 through a rotor case 15 as a covering. The rotor case 15 covers the electric motor 3 and an inboard-side part of the wheel bearing 2 which is located on the inboard side with respect to the hub flange 7 to define a separated space "Is" therein.

The entire electric motor 3 includs the stator 18 and the rotor 19, which all have a smaller diameter than that of the outer peripheral part 12b of the brake rotor 12. Further, the entirety of the stator 18 and the rotor 19 is located within an axial range L1 between the hub flange 7 and an outboard-side surface 8a of the knuckle 8. The electric motor 3 may be an interior permanent magnet (IPM) synchronous motor (or also abbreviated as an IPMSM (interior permanent magnet synchronous motor)) of an outer rotor type. The electric motor may also be a surface permanent magnet (SPM) synchronous motor. Besides, the motor generator 3 may be of any type, such as a switched reluctance motor (abbreviated as SR motor) and an induction motor (abbreviated as IM). In any of the motor types, the stator 18 may have any winding form, such as a distributed coil or a concentrated coil.

The rotor case 15 has a bottomed cylindrical shape and includes the case bottom 11 that has an annular flat plate-like shape and a case cylindrical portion 25 that extends from an outer peripheral edge of the case bottom 11 toward the inboard side in a cylindrical manner. The case bottom 11 and the case cylindrical portion 25 may be constructed as either a united piece or separate pieces. The case bottom 11 is disposed between the flat plate-like part 12a of the brake rotor 12 and the hub flange 7.

The case cylindrical portion 25 includes a cylindrical-portion main body 25a and a rotor-case-end ring member 26 that connects to an inboard-side end of the cylindrical-portion main body 25a. On an inner peripheral surface of the cylindrical-portion main body 25a, there are a small diameter part, a middle diameter part, and a large diameter part sequentially from the outboard side to the inboard side. The rotor 19 includes: a magnetic body 19a which is, e.g., press-fitted to the middle diameter part of the cylindrical-portion main body 25a; and a plurality of permanent magnets (not illustrated) which is incorporated in the magnetic body 19a. An outboard-side end of the rotor 19 is placed in contact with a stepped part connecting the small diameter part and the middle diameter part of the cylindrical-portion main body 25a, so that the rotor 19 is positioned with respect to the rotor case 15 in the axial direction.

The annular rotor-case-end ring member 26 is fixed to the large diameter part of the cylindrical-portion main body 25a and an end face thereof by a non-illustrated bolt or the like. A predetermined axial gap is defined between the rotor-case-end ring member 26 and an outboard-side surface 8a of the knuckle 8. The rotor-case-end ring member 26 includes an annular groove that is recessed inward in a radial direction on an outer peripheral surface thereof that faces the large diameter part of the cylindrical-portion main body 25a, and a seal component 28 is disposed in this annular groove.

As the seal component 28, for example, an O-ring is used, and the O-ring seals an interface between an end portion of an inner peripheral surface of the rotor case 15 and the rotor-case-end ring member 26. The rotor-case-end ring member 26 also serves as a positioning member that axially positions the permanent magnets incorporated in the magnetic body 19a. The cylindrical-portion main body 25a and the rotor-case-end ring member 26 may be unitedly formed by e.g. machining from a single material, instead of being constituted by multiple elements joined together.

As shown in Fig. 1 and Fig. 2, the stator 18 is attached to an outer peripheral surface of the outer ring 4 through a wheel-bearing fixing member 24. The stator 18 includes a stator core 18a and winding coils 18b wound around respective teeth of the stator core 18a. The winding coils 18b are connected to wiring Wr. The wheel-bearing fixing member 24 is in contact with an inner peripheral surface and an outboard-side end of the stator core 18a to retain the stator core 18a. The stator core 18a is, for example, fixed to the wheel-bearing fixing member 24 with respect to a rotation direction and the radial direction by press-fitting or fastening bolts.

The wheel-bearing fixing member 24 and the knuckle 8 are fastened by bolts 20. A cover radial plate part 22a of a unit cover 22 is interposed between an inboard-side end face of the wheel-bearing fixing member 24 and the outboard-side surface 8a of the knuckle 8. A non-illustrated communication hole is defined in the inboard-side end face of the wheel-bearing fixing member 24, and the communication hole allows wires of the winding coils 18b to pass therethrough from an outer diametric side to an inner diametric side of the wheel-bearing fixing member 24. The communication hole is only required to pass the wiring Wr generally including three wires of U, V, and W phases therethrough. The knuckle 8 includes a through hole which allows an outer peripheral surface of a cylindrical part 22b of the unit cover 22 to be inserted therethrough, and a plurality of insertion holes for the bolts 20 are located around the through hole.

A plurality of female threads extending in the axial direction are located at equal intervals in a circumferential direction at an inboard-side end of the wheel-bearing fixing member 24. The cover radial plate part 22a includes through holes in phase with the respective female threads. The respective bolts 20 are inserted into the insertion holes in the knuckle 8 from the inboard side of the knuckle 8 and pass through the insertion holes in the cover radial plate part 22a to be engaged with the respective female threads in the wheel-bearing fixing member 24. The wheel-bearing fixing member 24 and the outer ring 4 may be united. The term "united" means that the wheel-bearing fixing member 24 and the outer ring 4 are formed as parts of a single object by forging, machining, or the like from a single material, instead of being constituted by multiple elements joined together.

### <Seal Structure>

The vehicle power device 1 includes an inboard-side sealing component Sa, an outboard-side sealing component Sb, and an annular seal component Sc.

### <Inboard-Side Sealing Component Sa>

The inboard-side sealing component Sa provides a seal between an inboard-side end of the case cylindrical portion 25 and the outboard-side surface 8a of the knuckle 8. The rotor-case-end ring member 26 includes an annular groove that is recessed outward in the radial direction on an inboard-side part of an inner peripheral surface thereof, and an inboard-side sealing component Sa is disposed between this annular groove and an outer peripheral surface of the cover radial plate part 22a. The inboard-side sealing component Sa includes, for example, an annular seal plate and an elastic seal member facing each other between the annular groove and the outer peripheral surface of the cover radial plate part 22a.

### <Outboard-Side Sealing Component Sb>

The outboard-side sealing component Sb provides a seal between the case bottom 11 of the rotor case 15 and the outboard-side surface of the hub flange 7. The hub flange 7 includes an annular groove that is recessed in the axial direction on an outer diametric part of the outboard-side surface thereof. As the outboard-side sealing component Sb, for example, an O-ring is disposed in this annular groove, and the O-ring seals an interface between the case bottom 11 and the outboard-side surface of the hub flange 7.

### <Annular Seal Component Sc>

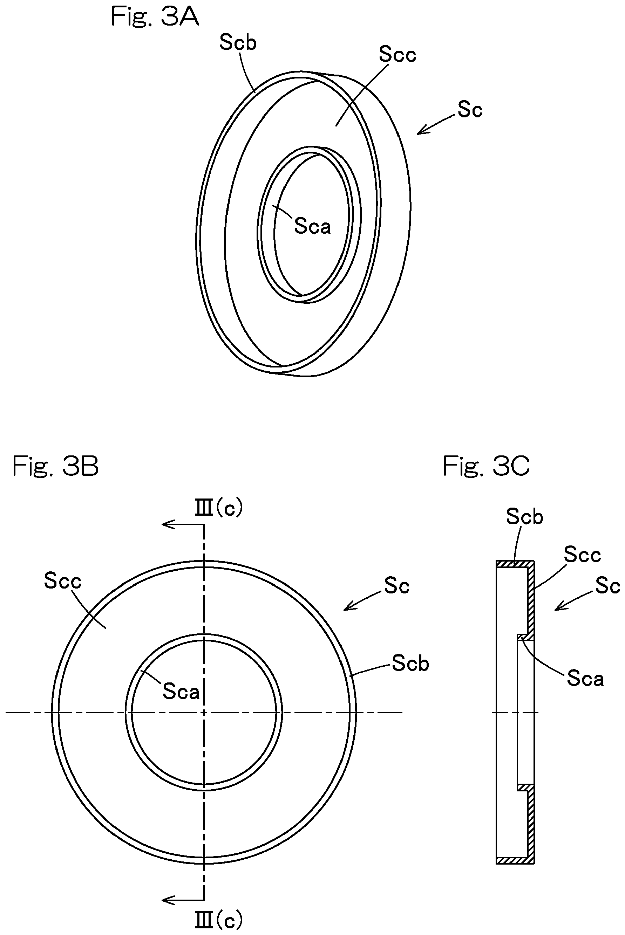

Fig. 3A is a perspective view of the annular seal component Sc; Fig. 3B shows the seal component Sc as viewed from one side in the axial direction; and Fig. 3C is a section view along line III(c)-III(c) of Fig. 3B. As shown in Fig. 1 and Figs. 3A-3C, the annular seal component Sc covers, from the inboard side of the hub flange 7, head parts 13a of a plurality of hub bolts 13 press-fitted into the hub flange 7 from the inboard side and covers the surrounding area of the head parts. The hub axle 5a includes a stepped part 5aa that connects to a base part 7a of the hub flange 7 on the inboard side. The stepped part 5aa and an outer peripheral surface of the hub flange 7 are machined, for example, by grinding in order to improve watertightness between these parts and the annular seal component Sc.

The annular seal component Sc includes an inner-diametric-side cylindrical part Sca, an outer-diametric-side cylindrical part Scb, and a radial plate part Scc connecting inboard-side ends of the cylindrical parts Sca, Scb. These cylindrical parts Sca, Scb and radial plate part Scc are unitedly formed from, e.g., a thin plate material made of a metal. The inner-diametric-side cylindrical part Sca is joined watertightly with the stepped part 5aa by press-fitting, and the outer-diametric-side cylindrical part Scb is joined watertightly with the outer peripheral surface of the hub flange 7 by press-fitting. Thus, the annular seal component Sc rotates coaxially with the hub axle 5a. It should be noted that due to the positional relation of the hub flange 7 located on the outboard side with respect to the stepped part 5aa, the outer-diametric-side cylindrical part Scb has a larger axial dimension by a predetermined extent than that of the inner-diametric-side cylindrical part Sca.

The radial plate part Scc faces coil ends of the winding coils 18b and an outboard-side end of the wheel-bearing fixing member 24 with predetermined axial gaps therebetween. The outer-diametric-side cylindrical part Scb faces an inner peripheral surface of the small diameter part of the case cylindrical portion 25 with a predetermined axial gap therebetween. The annular seal component Sc partitions the separated space Is into a main space for the electric motor and the like and an annular space Isa located on the inboard side of the hub flange 7. The annular space Isa that extends over the surrounding area of the head parts 13a of the hub bolts 13 is narrower than the main space.

### <Rotation Detector or the Like>

The vehicle power device 1 is provided with a rotation detector 31. The rotation detector 31 is located in a hollow internal space of the stator 18. The rotation detector 31 detects a rotation angle or a rotation speed of the inner ring 5 with respect to the outer ring 4 in order to control the rotation of the electric motor 3. The rotation detector 31 includes a to-be-detected part 31a attached to a to-be-detected part holding member 32 or the like and a sensor part 31b attached to an inner peripheral surface of the wheel-bearing fixing member 24 and adapted to detect the to-be-detected part 31a. The rotation detector 31 may be, for example, a resolver. It should be noted that the rotation detector 31 is not limited to a resolver and may be any of, for example, an encoder, a pulser ring, and a hall sensor, irrespective of the types.

As shown in Fig. 1 and Fig. 2, a connector cover 33 is attached to an inboard-side end of the cylindrical part 22b of the unit cover 22 so as to cover this inboard-side end. The connector cover 33 supports the wiring Wr of the electric motor 3 through a power wire connector 34 of a so-called panel mount type. The connector cover 33 also supports a sensor connector Cn of a panel mount type.

### <Effects and Advantages>

According to the vehicle power device 1 as described above, where the vehicle power device 1 including the electric motor 3 is mounted in a vehicle including a main drive source such as an internal combustion engine, the electric motor 3 can serve to, e.g., assist driving while the vehicle is driven and recover energy by generating power when the vehicle is braked. Further, the rotor case 15 as the covering covers the electric motor 3 and the inboard-side part of the wheel bearing 2, the part being located on the inboard side with respect to the hub flange 7, to define the separated space Is therein. Moreover, the vehicle power device includes the annular seal component Sc that covers, from the inboard side of the hub flange 7, the head parts 13a of the plurality of hub bolts 13 and the surrounding area thereof.

Thus, even if water penetrates from the press-fitting areas of the hub bolts 13 when the vehicle including the vehicle power device 1 mounted therein is driven in the rain etc., the water is blocked by the annular seal component Sc and thus does not reach the main space in which the electric motor 3 and the like are accommodated. This makes it possible to prevent the coil wires 18b of the stator 18 from being electrically short-circuited and the stator core 18a from rusting. Thus, the electric motor 3 can be kept normal.

The annular seal component Sc includes the inner-diametric-side cylindrical part Sca joined watertightly with the stepped part 5aa, the outer-diametric-side cylindrical part Scb joined watertightly with the outer peripheral surface of the hub flange 7, and the radial plate part Scc connecting the inboard-side ends of the inner-diametric-side and outer-diametric-side cylindrical parts Sca, Scb. Thus, the annular seal component Sc can be easily joined by making use of the stepped part 5aa of the hub axle 5a and the outer peripheral surface of the hub flange 7. Also, the annular seal component Sc can be disposed in an existing vacant space.

Since the electric motor 3 has a smaller diameter than that of the outer peripheral part 12b of the brake rotor 12, and the electric motor 3 is located within the axial range L1 between the hub flange 7 and the outboard-side surface 8a of the knuckle 8, it is possible to secure a space for disposing the electric motor 3 within the brake rotor 12, so that the electric motor 3 can be compactly accommodated.

### <Other Embodiments>

In the following description, the same reference numerals are used to denote parts that correspond to those previously described in the respective embodiments, and overlapping description is omitted. Where only a part of a configuration is described, the rest of the configuration is to be construed as being the same as the previously described embodiments unless otherwise indicated. The same configurations provide the same effects. It is possible not only to combine the parts that have been particularly described in the respective embodiments but also to partly combine the embodiments unless there is any hindrance to such a combination.

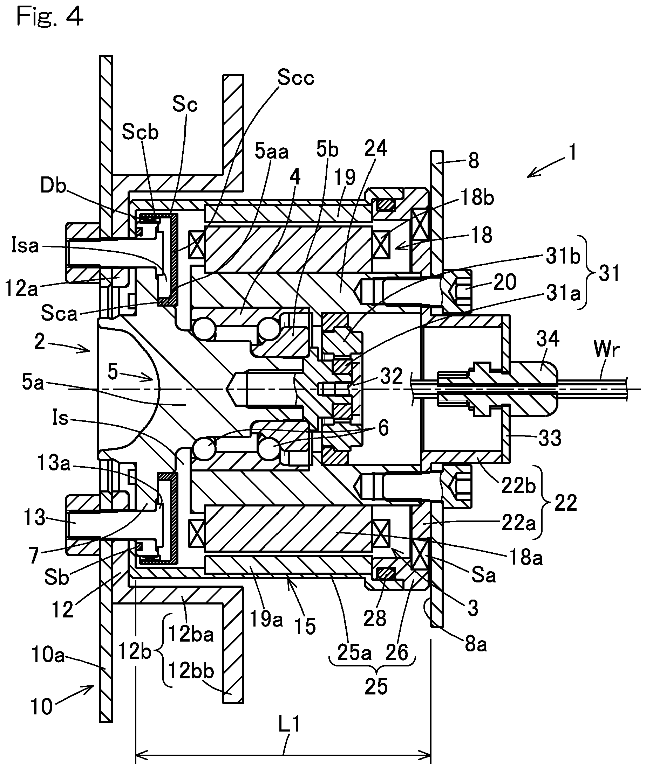

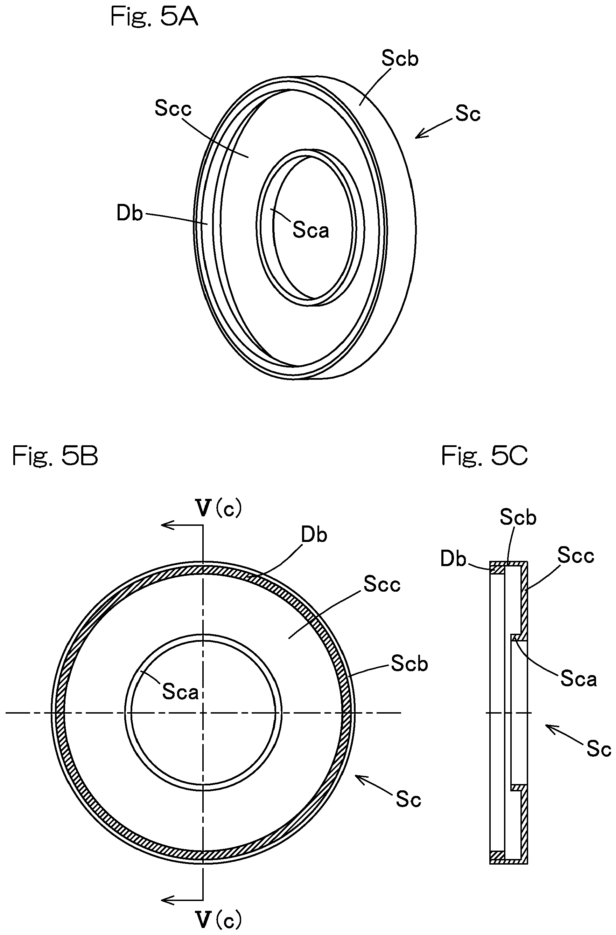

As shown in Fig. 4 and Figs. 5A-5C, a waterproof elastic member Db may be interposed between the outer-diametric-side cylindrical part Scb and the outer peripheral surface of the hub flange 7. Fig. 5A is a perspective view of the annular seal component Sc including the elastic member Db; Fig. 5B shows the seal component Sc as viewed from one side in the axial direction; and Fig. 5C is a section view along line V(c)-V(c) of Fig. 5B. The elastic member Db may generally be a rubber-based material, specifically an O-ring. The elastic member Db may be a rubber material adhered by vulcanization to the cylindrical part Scb of the seal component Sc. In this case, it is possible to prevent, e.g., inadvertent omission of and improper attachment of the elastic member Db to the annular seal component Sc and to reduce the number of assembling steps. Further, interposition of the elastic member Db makes it possible to secure necessary and sufficient watertightness by, e.g., griding the outer peripheral surface of the hub flange 7 and thus to reduce the number of processing steps.

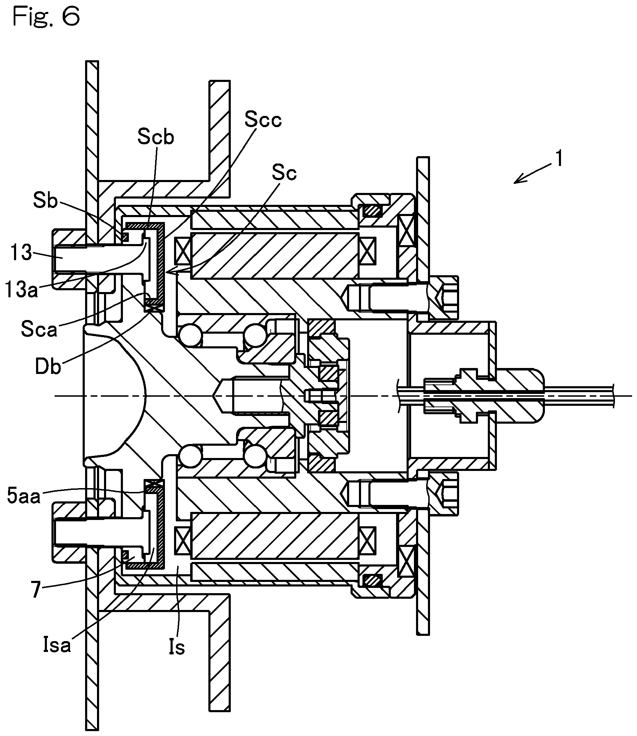

As shown in Fig. 6, a waterproof elastic member Db may be interposed between the inner-diametric-side cylindrical part Sca and the stepped part 5aa. In this case, it is possible to secure necessary and sufficient watertightness by, e.g., griding the stepped part 5aa and thus to reduce the number of processing steps. Besides, the same effects and advantages as the example of Fig. 4 and Figs. 5A-5C can be obtained. Although not illustrated, a waterproof elastic member Db may be interposed between the inner-diametric-side cylindrical part Sca and the stepped part 5aa, and another waterproof elastic member Db may be interposed between the outer-diametric-side cylindrical part Scb and the outer peripheral surface of the hub flange 7.

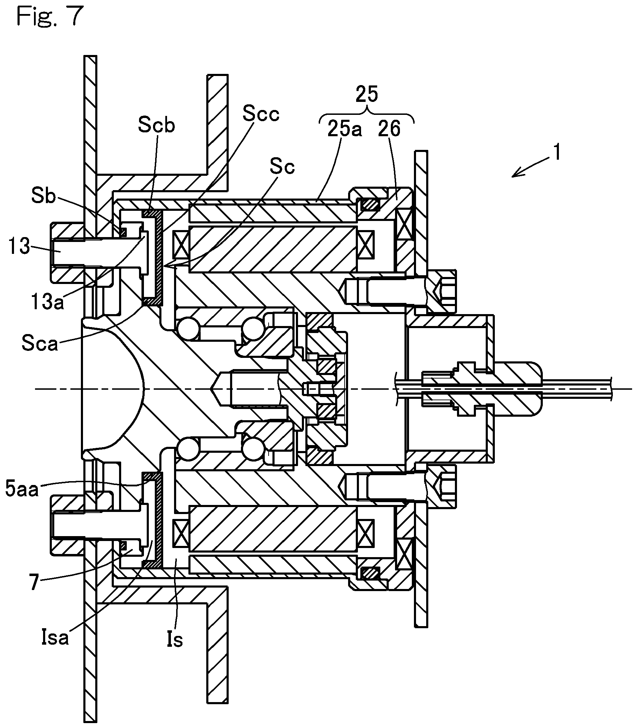

As shown in Fig. 7, the outer-diametric-side cylindrical part Scb of the seal component Sc may be joined with the inner peripheral surface of the cylindrical-portion main body 25a of the case cylindrical portion 25. That is, the annular seal component Sc may include the inner-diametric-side cylindrical part Sca joined watertightly with the stepped part 5aa, the outer-diametric-side cylindrical part Scb joined watertightly with the inner peripheral surface of the cylindrical-portion main body 25a, and the radial plate part Scc connecting the inboard-side ends of the inner-diametric-side and outer-diametric-side cylindrical parts Sca, Scb.

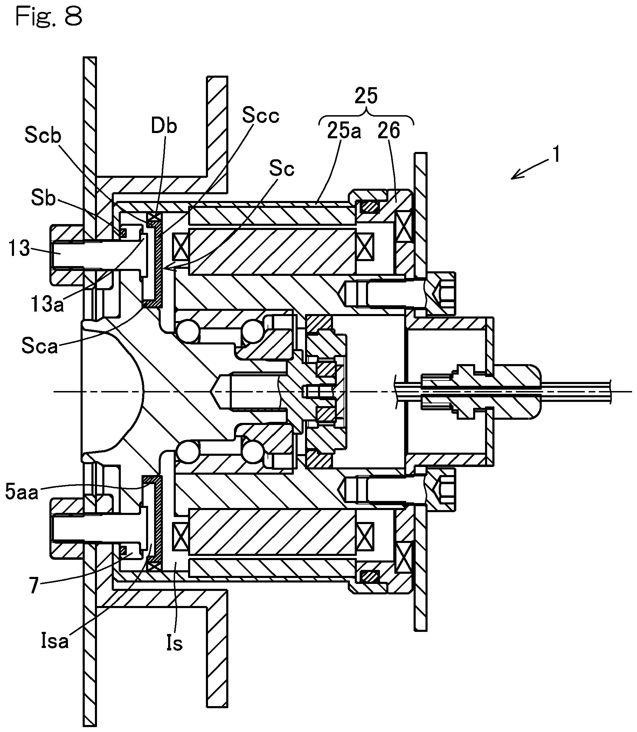

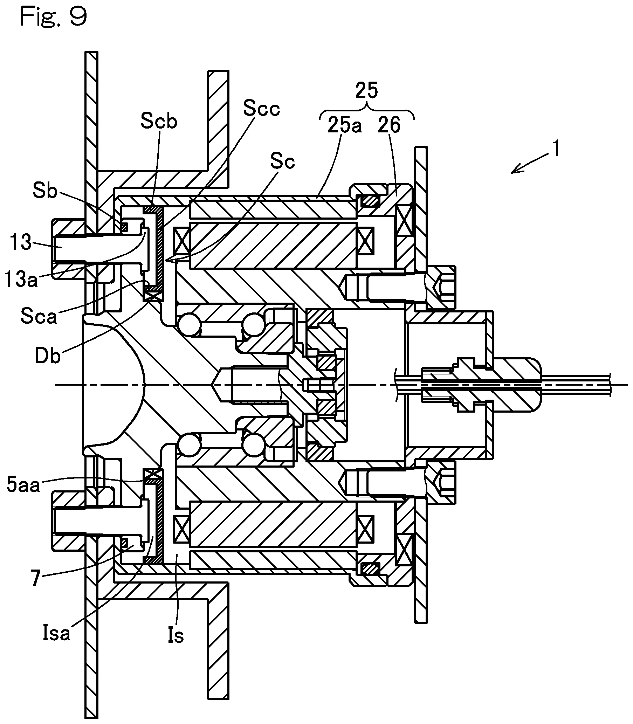

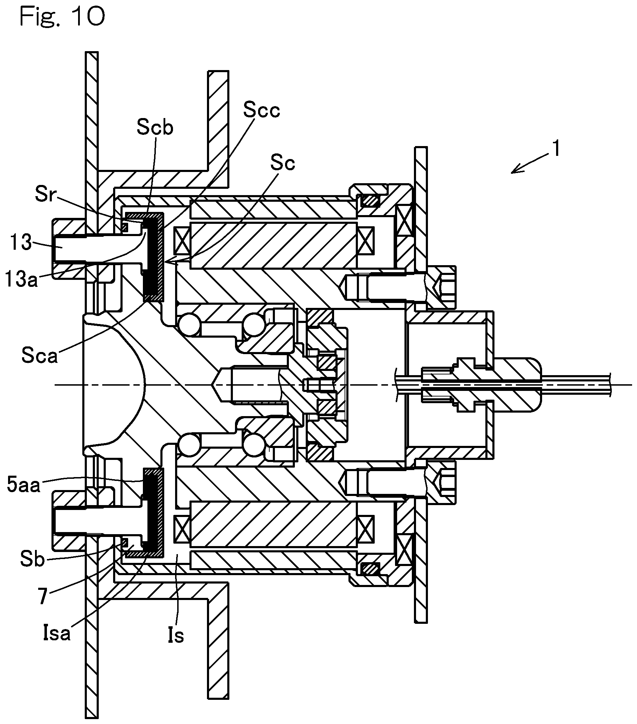

As shown in Fig. 8, a waterproof elastic member Db may be interposed between the outer-diametric-side cylindrical part Scb and the inner peripheral surface of the cylindrical-portion main body 25a of the case cylindrical portion 25. As shown in Fig. 9, a waterproof elastic member Db may be interposed between the inner-diametric-side cylindrical part Sca and the stepped part 5aa. Although not illustrated, a waterproof elastic member Db may be interposed between the inner-diametric-side cylindrical part Sca and the stepped part 5aa, and a waterproof elastic member Db may be interposed between the outer-diametric-side cylindrical part Scb and the inner peripheral surface of the cylindrical-portion main body 25a of the case cylindrical portion 25. As shown in Fig. 10, the vehicle power device 1 may include a resin member Sr filled in the annular space Isa delimited by the inner-diametric-side and outer-diametric-side cylindrical parts Sca, Scb, the radial plate part Scc, and the hub flange 7. In this case, the resin member Sr can effectively block water penetration from the press-fitting areas of the hub bolts 13 to improve waterproof performance.

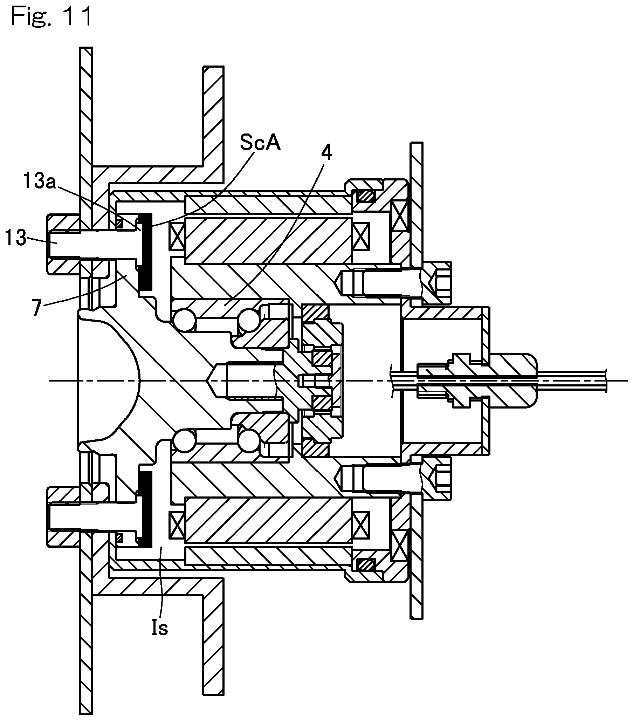

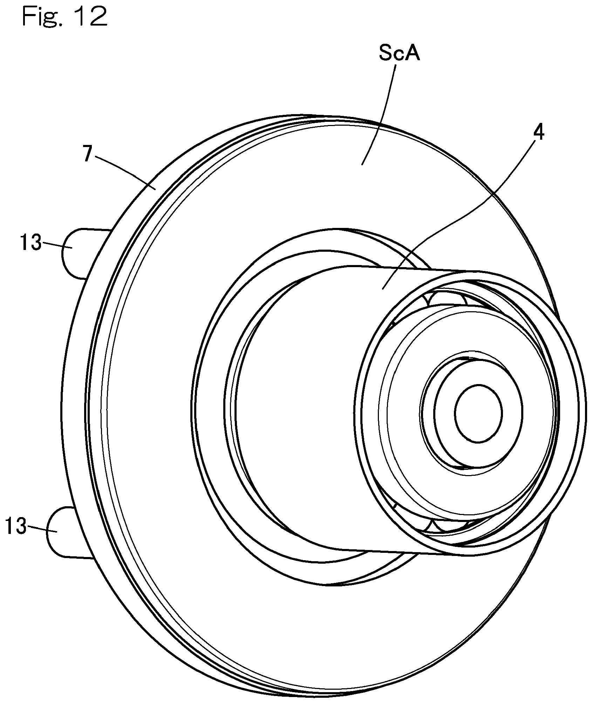

As shown in Fig. 11 and Fig. 12, an annular seal component ScA made of a resin material may be attached to a surrounding area of the head parts 13a of the hub bolts 13 in the hub flange 7. The seal component ScA is provided by, e.g., injection molding on the inboard-side surface of the hub flange 7. In this case, cost reduction can be more easily achieved than in a case of an annular seal component made of a metal material.

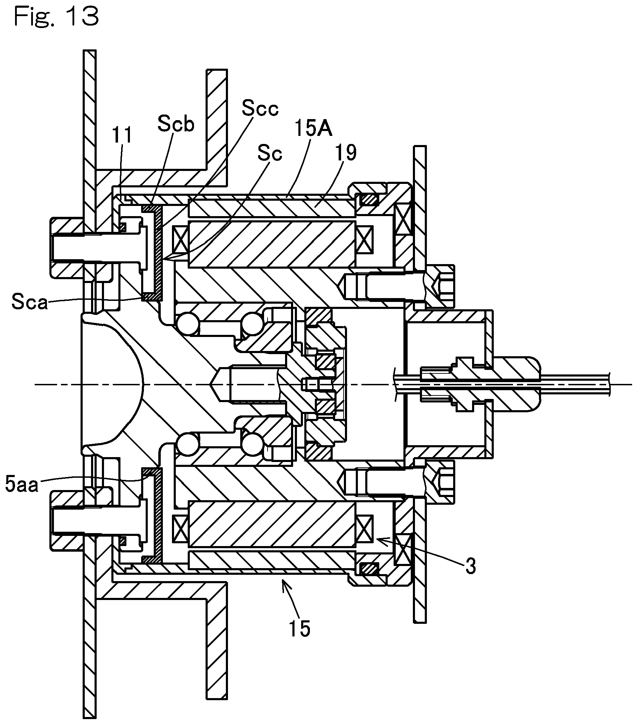

As shown in Fig. 13, the rotor case 15 may have a divided structure including the case bottom 11 and a rotor-case main body 15A made of a magnetic material. The case bottom 11 includes an engaging part extending over a predetermined distance from the outer peripheral edge of the case bottom toward the inboard side, and the rotor-case main body 15A includes, at the outboard-side end thereof, an engaged part that can be brought into engagement with the engaging part. The engaging part and the engaged part in engagement are joined together by, e.g., welding. The rotor-case main body 15A defines a magnetic passage for a magnetic flux generated from the rotor 19 and contributes to improvement in output of the electric motor 3. In this structure, the annular seal component Sc includes the inner-diametric-side cylindrical part Sca joined watertightly with the stepped part 5aa, the outer-diametric-side cylindrical part Scb joined watertightly with the inner peripheral surface of the cylindrical-portion main body 25a, and the radial plate part Scc connecting the inboard-side ends of the inner-diametric-side and outer-diametric-side cylindrical parts Sca, Scb.

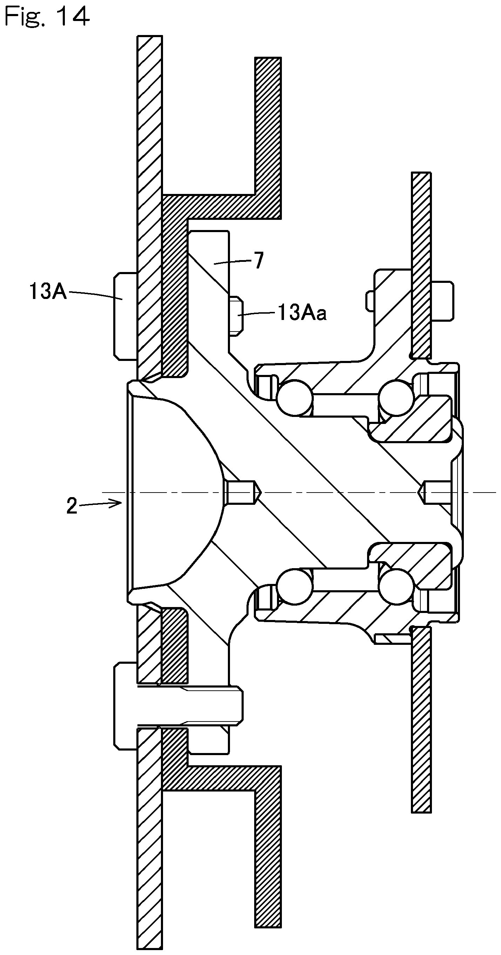

In the above exemplary embodiments, the description has been made with reference to a vehicle power device including a hub-bolt-type wheel bearing and an electric motor. However, any of the above annular seal components can be used in a vehicle power device including a wheel-bolt-type wheel bearing 2 as shown in Fig. 14 and an electric motor 3 (Fig. 1). That is, an annular seal component is provided so as to cover, from the inboard side of the hub flange 7, tip end parts 13Aa of a plurality of wheel bolts 13A inserted into the hub flange 7 from the outboard side and a surrounding area thereof.

The inner-diametric-side and outer-diametric-side cylindrical parts Sca, Scb may be joined with a target attachment area by, e.g., bonding or welding. The vehicle power device in the present embodiment has a third generation structure which includes a hub axle fitted with a single partial inner ring as a rotary ring and is constituted by an assembly of an outer ring as a stationary ring, the hub axle and the partial inner ring. However, the configuration of the vehicle power device is not limited to this structure.

A structure body combinedly including a hub having a hub flange and a member having raceway surfaces for rolling elements corresponds to a rotary ring in the claims. For example, the vehicle power device may have a first generation structure including an outer ring mainly serving as a stationary ring and an inner ring fitted to an outer peripheral surface of a hub having a hub flange, or a second generation structure of an inner ring rotation type including an outer ring as a stationary ring and an inner ring fitted to an outer peripheral surface of a hub having a hub flange. In these examples, a combined body of the hub and the inner ring corresponds to a "rotary ring" in the claims. The vehicle power device may have a second generation structure of an outer ring rotation type including an outer ring as a rotary ring having a hub flange and an inner ring as a stationary ring. The vehicle power device may also be applied to an inner-rotor-type electric motor in which a rotor is located radially inward with respect to a stator.

### <Generator-Equipped Wheel Bearing Device>

The electric motor 3 used in the respective embodiments is an electric motor for drive assistance capable of generating power by rotation of a wheel and of rotationally driving the wheel when power is fed. Instead of such an electric motor 3, it is possible to use a generator that has a power generation function but is not capable of rotationally driving the wheel when power is fed. A generator-equipped wheel bearing device including such a generator and a wheel bearing device 2 is provided with any of the above annular seal components. The generator-equipped wheel bearing device has the same configuration as any of the above vehicle power devices, except for the electric motor. Also in this case, the same effects and advantages as the respective embodiments can be obtained.

Although the present invention has been described in terms of the preferred embodiments thereof with reference to the drawings, various additions, modifications, or deletions may be made without departing from the scope of the invention. Accordingly, such variants are included within the scope of the present invention.

### [Reference Numerals]

- 2: wheel bearing
- 3: electric motor
- 4: outer ring (stationary ring)
- 5: inner ring (rotary ring)
- 5aa: stepped part
- 6: rolling element
- 7: hub flange
- 10: wheel
- 13: hub bolt (bolt)
- 13a: head part
- 13A: wheel bolt (bolt)
- 13Aa: tip end part
- 15: rotor case (covering)
- 18: stator
- 19: rotor
- Sc: annular seal component
- Sca: inner-diametric-side cylindrical part
- Scb: outer-diametric-side cylindrical part
- Scc: radial plate part
- Sr: resin member
- Db: elastic member

## Claims

1. A vehicle power device comprising:
a wheel bearing including a stationary ring and a rotary ring rotatably supported by the stationary ring through rolling elements, the rotary ring including a hub flange configured to be attached with a wheel of a vehicle; and
an electric motor including a stator attached to the stationary ring and a rotor attached to the rotary ring,
wherein the vehicle power device includes:
a covering that covers the electric motor and an inboard-side part of the wheel bearing located on an inboard side with respect to the hub flange to define a separated space therein; and
an annular seal component that covers, from the inboard side of the hub flange, head parts of a plurality of hub bolts press-fitted into the hub flange and a surrounding area thereof or covers tip end parts of a plurality of wheel bolts inserted into the hub flange and a surrounding area thereof.

2. The vehicle power device as claimed in claim 1, wherein the rotary ring includes a stepped part that connects to a base part of the hub flange on the inboard side, and
the annular seal component includes:
an inner-diametric-side cylindrical part joined watertightly with the stepped part;
an outer-diametric-side cylindrical part joined watertightly with an outer peripheral surface of the hub flange; and
a radial plate part connecting inboard-side ends of the inner-diametric-side cylindrical part and the outer-diametric-side cylindrical part.

3. The vehicle power device as claimed in claim 2, comprising: a waterproof elastic member interposed either or both of between the inner-diametric-side cylindrical part and the stepped part and between the outer-diametric-side cylindrical part and the outer peripheral surface of the hub flange.

4. The vehicle power device as claimed in claim 2 or 3, comprising: a resin member filled in an annular space delimited by the inner-diametric-side cylindrical part, the outer-diametric-side cylindrical part, the radial plate part, and the hub flange.

5. The vehicle power device as claimed in claim 1, wherein the rotary ring includes a stepped part that connects to a base part of the hub flange on the inboard side, and
the annular seal component includes:
an inner-diametric-side cylindrical part joined watertightly with the stepped part;
an outer-diametric-side cylindrical part joined watertightly with an inner peripheral surface of the covering; and
a radial plate part connecting inboard-side ends of the inner-diametric-side cylindrical part and the outer-diametric-side cylindrical part.

6. The vehicle power device as claimed in claim 5, comprising: a waterproof elastic member interposed either or both of between the inner-diametric-side cylindrical part and the stepped part and between the outer-diametric-side cylindrical part and the inner peripheral surface of the covering.

7. The vehicle power device as claimed in claim 3 or 6, wherein the elastic member is rubber or is adhered by vulcanization to the annular seal component.

8. The vehicle power device as claimed in any one of claims 1 to 7, wherein the annular seal component is made of a resin material.

9. The vehicle power device as claimed in any one of claims 1 to 8, wherein the stationary ring is an outer ring, the rotary ring is an inner ring, the covering is fixed to the hub flange of the inner ring, the covering includes a case cylindrical portion that has a cylindrical shape and covers the electric motor and the inboard-side part of the wheel bearing located on the inboard side with respect to the hub flange, and the stator is disposed on an outer periphery of the outer ring.

10. A generator-equipped wheel bearing device comprising:
a wheel bearing including a stationary ring and a rotary ring rotatably supported by the stationary ring through rolling elements, the rotary ring including a hub flange configured to be attached with a wheel of a vehicle; and
a generator including a stator attached to the stationary ring and a rotor attached to the rotary ring,
wherein the generator-equipped wheel bearing device includes:
a covering that covers the generator and an inboard-side part of the wheel bearing located on an inboard side with respect to the hub flange to define a separated space therein; and
an annular seal component that covers, from the inboard side of the hub flange,
head parts of a plurality of hub bolts press-fitted into the hub flange and a surrounding area thereof or covers tip end parts of a plurality of wheel bolts
inserted into the hub flange and a surrounding area thereof.
